(19) Europäisches Patentamt
European Patent Office
Office européen des brevets

(11) **EP 2 312 803 A2**

(12) **EUROPÄISCHE PATENTANMELDUNG**

(43) Veröffentlichungstag:
**20.04.2011 Patentblatt 2011/16**

(51) Int Cl.:
***H04L 29/06*** *(2006.01)* ***G06F 21/00*** *(2006.01)*

(21) Anmeldenummer: **10075716.0**

(22) Anmeldetag: **15.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.10.2009 PL 38974209**

(71) Anmelder: **Matelski, Slawomir**
**93-558 Lodz (PL)**

(72) Erfinder: **Matelski, Slawomir**
**93-558 Lodz (PL)**

(54) **Vorrichtung und ein Verfahren zur Identifizierung und Authentifizierung der Identitat**

(57) Die Erfindung verwendet eine neue Art der Public-Key-Infrastruktur, bei der öffentliche und private Schlüssel in Form eines 2D Barcode benutzt werden. Der Benutzer braucht zur Identifizierung und Authentifizierung keine Karte, keinen Token oder andere materielle persönliche Gegenstände, und doch ist die Sicherheit dieser Lösung mit einem elektronischen Token vergleichbar.

Eine komplette Vorrichtung zur Identifizierung und Authentifizierung zeigt die Abbildung 1:
Der Mikrocontroller (1) erhält Daten von der Tastaturmatrix (3), die einen 2D Public-Key darstellt.

Wenn dieser Public-Key im Speichermodul (2) gefunden wird, werden die Daten des privaten Schlüssels eingelesen und zur Verifizierung der Identität verwendet. Der private Schlüssel enthält eine Information darüber, welche Elemente der im Display (6) abgebildeten Codiermatrix ein Benutzer ablesen muss um die richtigen Werte auf der Tastatur (7) einzutippen. Inhalt der Codiermatrix wird bei jeder Verifizierung von einem Zufallszahlengenerator (5) neu bestimmt. Das Ergebnis der Authentifizierung wird positiv wenn die Ähnlichkeit zwischen dem verschlüsselt eingeführten Muster zum registriertem Muster ausreichend ist.

Fig.**1**. Blockdiagramm der Vorrichtung zur Authentifizierung der Identität

**Beschreibung**

Die Erfindung verwendet eine neue Art der Public-Key-Infrastruktur, bei der öffentliche und private Schlüssel in Form eines 2D Barcode benutzt werden.

Es gibt einige allgemein bekannte Authentifizierungsethoden. Dabei ist die gängigste Methode die manuelle Eingabe eines unveränderlichen Textstrings über die Tastatur, sowohl für die Identifikation als auch für die Überprüfung von statischen Passwörtern. Ein solches Verfahren ist die einfachste und billigste Methode, es benötigt vom Anwender keine Requisiten, aber der Prozess der Authentifizierung ist unsicher aufgrund der statischen Natur des zu überprüfenden Kennworts, sowie unbequem, wegen der Notwendigkeit, sich an eine wachsende Zahl von IDs und Passwörter für verschiedene Zwecke erinnern zu müssen.

Andere, fortschrittlichere Methoden verwenden zusätzliche Requisiten wie z.B. Einmal-Passwort-Listen oder elektronische Token, d.h. Generatoren von sogenannten OTP (One Time Password), bzw. spezielle elektronische Krypto-Karten (smart cards), die gleichzeitige Identifizierung und Authentifizierung erlauben, wobei sich das Sicherheitsniveau und die Kosten proportional zur Kraft der eingesetzten Algorithmen und Leistungsbedarf des Mikroprozessors verhalten. Der Nachteil ist die Notwendigkeit, eine oder mehrere solcher Requisiten für verschiedene Zwecke zu besitzen, hohe Kosten, sowie das Risiko, dass diese Gegenstände oft verloren, gestohlen, kopiert oder beschädigt werden.

Oben genante Nachteile betreffen auch die biometrischen Merkmale, wenn auch in etwas anderer Weise, d.h. Beschädigung durch Verletzung, oder Verlust durch Amputation. Die Körperteile lassen sich auch heimlich scannen und danach durch künstliche Teile ersetzen— was mit einem Diebstahl oder Fälschung der biometrischen Merkmale gleichsetzbar ist und somit irreparablen Schaden einrichtet.

Die vorliegende Erfindung hat den Vorteil der einfachsten Authentifizierungsmethode (ID & Passwort), sowie Vorteile die sich aus der raschen Identifizierung durch eine elektronische ID-Karte ergeben und ein hohes Maß an Sicherheit der Verifizierung, die ein Token gewährleistet.

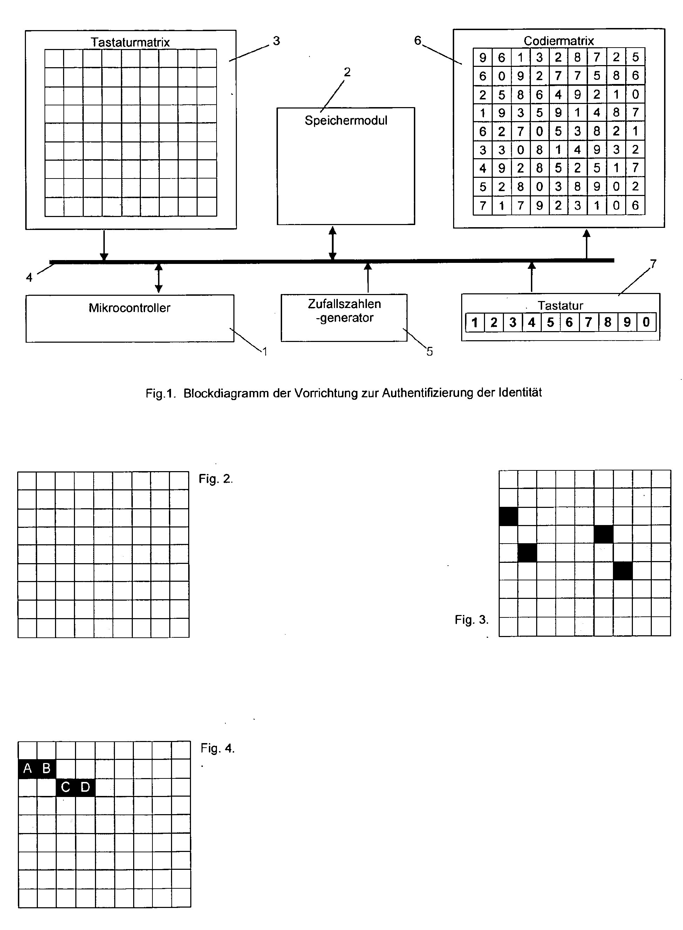

Vor der ersten Benutzung der Erfindung muss der Benutzer mittels der Tastaturmatrix zwei eigene Muster in dem Speichermodul registrieren: Eines für die Identifikation und ein zweites für das Verifizierungsverfahren. Diese Tastaturmatrix hat viele speziell gekennzeichnete Felder (Abbildung 2), um sich die beiden Muster leicht zu merken.

Die Matrix (3)/(6) ist groß genug um die erforderliche Anzahl der charakteristischen Elemente, die ein Muster von anderen unterscheidet, möglichst gering zu halten, also 3 bis 6 Elemente, jedoch nicht zu groß, damit das Muster nicht nur auf einem PC-Monitor, sondern auch auf kleinen Displays, wie es bei Pocket PCs oder beim Smartphone gebräuchlich ist.

Die Anzahl der charakteristischen Elemente des Musters, die Matrixgröße und die Anzahl der Werte, die jedes Element annehmen kann, haben eine wichtige Bedeutung für das Sicherheitsniveau und für die Geschwindigkeit der Identifizierung und Authentifizierung.

Im Prozess der Identifizierung und Authentifizierung der Identität mittels Vorrichtung (Abbildung 1), die nach der vorliegende Erfindung gefertigt wurde, sind 2 Objekte der Public-Key-Infrastruktur verwendet:

Public-Key (öffentlicher Schlüssel)—ein Muster in der Tastaturmatrix, nach den die Tasten gedrückt werden müssen, um die Identität festzustellen. Der Mikrocontroller (1) prüft den aktuellen Status der Tasten in der Matrix und sucht ein entsprechendes Muster im Speichermodul, um auch den zugewiesenen privat Schlüssel einzulesen und mit der Eingabe des Benutzers zu vergleichen.

Private-Key (privater Schlüssel)— ein Muster in der Codiermatrix, das im Display-Modul dargestellt wird, das eine Information darüber enthält, welche Elemente in der abgebildeten Codiermatrix ein Benutzer erkennen muss um die entsprechenden Tasten in der Tastatur (7) zu drücken. Wenn die Tastatur (7) aus N Tasten besteht, bestimmt der Zufallszahlengenerator (ZZG) (5) welche Taste (im Bereich 1 bis N), ihre optischen Eigenschaften auf das nächste Element der Codiermatrix zugeordnet sind.

Der Inhalt der Codiermatrix wird bei jeder Verifizierung von einem ZZG (5) neu bestimmt.

Bei der Verifikation berechnet der Mikrocontroller den Grad der optischen Ähnlichkeit zwischen gedrückter Taste und dem Codiermatrix-Element, dessen Position in der Matrix vom registrierten Private-Key Muster bestimmt ist. Falls sie ähnlich genug sind, wird die Verifizierung positiv. Wird die Verifizierung für alle charakteristischen Elemente positiv, so wird auch gesamte Authentitätsprüfung mit einem positiven Ergebnis abgeschlossen.

Die Kraft der Verschlüsselung der Private-Key Eingabe ist mit einem Token vergleichbar, denn bei jeder Authentitätsprüfung werden alle Codiermatrixelemente wieder von dem ZZG bestimmt.

Die Anwendung von Anspruch 7 erhöht die Kraft der Verschlüsselung zusätzlich, da die Codiermatrix nicht nur für neue Authentitätsprüfung, sondern auch nach jedem Tastendruck der Tastatur (7) neu gebildet wird.

Aus der Sicht der Kryptographie ist es auch vorteilhaft, wenn nach Anspruch 5 Farben anstatt von Textzeichen zum Codieren benutzt werden, da die Codierung durch die Tatsache, dass die optischen Eigenschaften der Vision begrenzt sind, weniger eindeutig (Fuzzy-Logic) wird.

**Ein Beispiel der Erfindung**

- In Bezug auf die Vorrichtung

In der einfachsten Variante der Vorrichtung kann die Tastaturmatrix (3) und Tastatur (7) in Form einer Folientastatur hergestellt werden, wobei die Tasten mit einer Farbenpalette gekennzeichnet sind und eine RGB Diodenmatrix als das bildgebende Modul (6) funktioniert, deren RGB Kombination entsprechende Farben erzeugt, was von dem Mikrocontroller (1) gesteuert ist. Das ZZG Modul (5) kann entweder zusätzlich eingebaut werden, oder vom Programm des Mikrocontrollers emuliert werden.

Eine technologisch fortschrittlichere Variante nutzt die Hardwaremodule eines Pocket PC aus, das über ein Farb-Touchscreen-LCD verfügt, was sowohl für eine Darstellung der Codiermatrix dient als auch eine Tastatur (7), und die Tastaturmatrix (3) ersetzt.

Der Mikroprozessor und fortgeschrittene Betriebssysteme emulieren den erforderlichen ZZG Modul (5). Eine sehr ähnliche Variante kann auch in einem standardmäßigen PC realisiert werden, indem die Tastaturmatrix (3) und optional auch die Tastatur (7) auf dem Bildschirm mit Hilfe von einem Zeigegerät wie z. B. eine Maus ersetzt werden können.

- in Bezug auf das Verfahren

Tastaturmatrix (3) und Codiermatrix werden von einer Tabelle dargestellt, die beispielweise aus 9 x 9 = 81 Elementen besteht. Das ergibt 39.929.760 mögliche Identitäten bei Verwendung von lediglich 4 charakteristischen Elementen der ID-Matrix.

Die Tastatur (7), bestehend aus den 10 Ziffern 0-9, ermöglicht eine Anzahl von $10 \wedge N$ möglichen Kombinationen in der Verifikationsphase. Bei N = 4 Elementen gibt es $10 \wedge 4 = 10.000$ Kombinationen, die den Privat-Key verschlüsseln.

Das Verfahren kann mit Hilfe von mathematischen Formeln beschrieben werden. Bei Initiation der Registrierung einer Identität wird die Private-Key-Matrix P = 0 gesetzt.

Der Eigentümer dieser Identität bestimmt, welche Elemente dieser Matrix zur Verifikation benutzt werden,

$$\text{z. B.} \quad P(2,1) = P(2,2) = P(3,3) = P(3,4) = 1$$

Der Mikrokontroller (1) sichert diese Angaben im Speichermodul (2).

Die Keypadtasten (7) haben beispielweise die Werte: K = {1, 2, 3, 4, 5, 6, 7, 8, 9, 0} was den Ziffern entspricht, die auf den Tasten gekennzeichnet sind. Die Werte können jedoch beliebig gespeichert sein, z. B. als ein Farbcode. Jedem Element der Matrix wird nacheinenderer ein Wert zugewiesen, deren Position mittels ZZG (5) von der Matrix K ausgewählt wurde.

$$\forall\, 1 \le x \le 9,\, 1 \le y \le 9 \quad M(x,y) = K(rand(1,10))$$

Der Benutzer muss jetzt seinen eingeprägten Privat-Key V mittels Tastatur (7) in der verschlüsselten Form eingeben, wobei er dazu nur die N charakteristischen Elemente der Codiermatrix $M$ verwendet.

$$T = V \times M$$

In diesem Beispiel, für o.g. Token aus der Tokenmatrix Tgilt:

$$T(2,1) = 6,\ T(2,2) = 5,\ T(3,3) = 0,\ T(3,4) = 2$$

falls gleichzeitig auch Anspruch 7 angewendet ist, was bedeutet, dass nach jedem Tastendruck der Inhalt der Codiermatrix $M$ wieder mittels ZZG bestimmt ist.

Wenn nach *V x M = T = P x M* die Verifizierung positiv ist, wird die Authentizität der Identität bestätigt.
Beim Anwenden des Anspruchs 5 oder 6e soll diese Bedingung modifiziert werden, um die Toleranz der Ähnlichkeit zwischen V und P zu berücksichtigen.

**Zeichnungen**

Fig. 1.  Blockdiagramm der Vorrichtung zur Authentifizierung der Identität.
Fig. 2.  Eine leere Tabelle, ähnlich für Identifikation und Verifikation. Nur die Elemente der topographischen Orientierung sichtbar sind.
Fig. 3.  ID-Matrix mit Markierung der 4 ID-Elemente (der registrierte 2D Public-Key).
Fig. 4.  Die Codiermatrix während der Registrierung des Privat-Keys vom Benutzer, der dazu die Elemente A, B, C und D markiert hat.

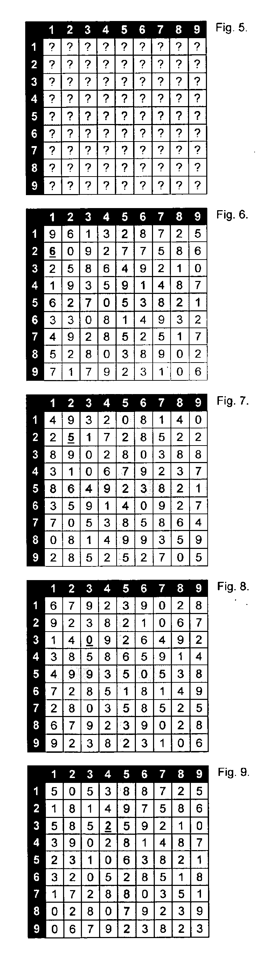

Fig. 5.  Die Codiermatrix während der Verifizierung des Privat-Keys wurde mittels ZZG gefüllt, was mit Fragezeichen markiert wurde, denn die Werte unbestimmt sind. Der Benutzer muss die Werte von der Position A=(2,1), B=(2,2), C=(3,3) und D=(3,4) ablesen.
Fig. 6.  Im erstem Schritt soll die Ziffer 6 von der Position (2, 1) gelesen werden.
Fig. 7.  Im zweitem Schritt soll die Ziffer 5 von der Position (2, 2) gelesen werden.
Fig. 8.  Im drittem Schritt soll die Ziffer 0 von der Position (3, 3) gelesen werden.
Fig. 9.  Im viertem Schritt soll die Ziffer 2 von der Position (3, 4) gelesen werden. Der Token hat also zum Schluss die Werte: 6, 5, 0, 2.

Fig.1. Blockdiagramm der Vorrichtung zur Authentifizierung der Identität

Fig. 2.
Eine leere Tabelle, ähnlich für Identifikation und
Verifikation. Nur die Elemente
der topographischen Orientierung sichtbar sind

Fig. 3.
ID-Matrix mit Markierung der 4 ID-Elemente
(der registrierte 2D Public-Key).

Fig. 4.
Die Codier-Matrix während der Registrierung des Privat-Keys vom Benutzer,
der dazu die Elemente A, B, C und D markiert hat.

| | 1 | 2 | 3 | 4 | 5 | 6 | 7 | 8 | 9 |
|---|---|---|---|---|---|---|---|---|---|
| 1 | ? | ? | ? | ? | | ? | ? | ? | ? |
| 2 | ? | ? | ? | ? | | ? | ? | ? | ? |
| 3 | ? | ? | ? | ? | | ? | ? | ? | ? |
| 4 | ? | ? | ? | ? | | ? | ? | ? | ? |
| 5 | | | | | | | | | |
| 6 | ? | ? | ? | ? | | ? | ? | ? | ? |
| 7 | ? | ? | ? | ? | | ? | ? | ? | ? |
| 8 | ? | ? | ? | ? | | ? | ? | ? | ? |
| 9 | ? | ? | ? | ? | | ? | ? | ? | ? |

Fig. 5.
Die Codier-Matrix während der Verifizierung des Privat-Keys wurde mittels ZZG
gefüllt, was mit Fragezeichen markiert wurde, denn die Werte unbestimmt sind.
Der Benutzer muss die Werte von der Position
A=(2,1), B=(2,2), C=(3,3) und D=(3,4) ablesen.

| | 1 | 2 | 3 | 4 | 5 | 6 | 7 | 8 | 9 |
|---|---|---|---|---|---|---|---|---|---|
| 1 | 9 | 6 | 1 | 3 | | 8 | 7 | 2 | 5 |
| 2 | 6 | 0 | 9 | 2 | | 7 | 5 | 8 | 6 |
| 3 | 2 | 5 | 8 | 6 | | 9 | 2 | 1 | 0 |
| 4 | 1 | 9 | 3 | 5 | | 1 | 4 | 8 | 7 |
| 5 | | | | | | | | | |
| 6 | 3 | 3 | 0 | 8 | | 4 | 9 | 3 | 2 |
| 7 | 4 | 9 | 2 | 8 | | 2 | 5 | 1 | 7 |
| 8 | 5 | 2 | 8 | 0 | | 8 | 9 | 0 | 2 |
| 9 | 7 | 1 | 7 | 9 | | 3 | 1 | 0 | 6 |

Fig. 6.
Im erstem Schritt soll die Ziffer 6 von der Position (2, 1) gelesen werden.

| | 1 | 2 | 3 | 4 | 5 | 6 | 7 | 8 | 9 |
|---|---|---|---|---|---|---|---|---|---|
| 1 | 4 | 9 | 3 | 2 | | 8 | 1 | 4 | 0 |
| 2 | 2 | <u>5</u> | 1 | 7 | | 8 | 5 | 2 | 2 |
| 3 | 8 | 9 | 0 | 2 | | 0 | 3 | 8 | 8 |
| 4 | 3 | 1 | 0 | 6 | | 9 | 2 | 3 | 7 |
| 5 | | | | | | | | | |
| 6 | 3 | 5 | 9 | 1 | | 0 | 9 | 2 | 7 |
| 7 | 7 | 0 | 5 | 3 | | 5 | 8 | 6 | 4 |
| 8 | 0 | 8 | 1 | 4 | | 9 | 3 | 5 | 9 |
| 9 | 2 | 8 | 5 | 2 | | 2 | 7 | 0 | 5 |

Fig. 7.
Im zweitem Schritt soll die Ziffer 5 von der Position (2, 2) gelesen werden.

| | 1 | 2 | 3 | 4 | 5 | 6 | 7 | 8 | 9 |
|---|---|---|---|---|---|---|---|---|---|
| 1 | 6 | 7 | 9 | 2 | | 9 | 0 | 2 | 8 |
| 2 | 9 | 2 | 3 | 8 | | 1 | 0 | 6 | 7 |
| 3 | 1 | 4 | <u>0</u> | 9 | | 6 | 4 | 9 | 2 |
| 4 | 3 | 8 | 5 | 8 | | 5 | 9 | 1 | 4 |
| 5 | | | | | | | | | |
| 6 | 7 | 2 | 8 | 5 | | 8 | 1 | 4 | 9 |
| 7 | 2 | 8 | 0 | 3 | | 8 | 5 | 2 | 5 |
| 8 | 6 | 7 | 9 | 2 | | 9 | 0 | 2 | 8 |
| 9 | 9 | 2 | 3 | 8 | | 3 | 1 | 0 | 6 |

Fig. 8.
Im drittem Schritt soll die Ziffer 0 von der Position (3, 3) gelesen werden.

| | 1 | 2 | 3 | 4 | 5 | 6 | 7 | 8 | 9 |
|---|---|---|---|---|---|---|---|---|---|
| 1 | 5 | 0 | 5 | 3 | | 8 | 7 | 2 | 5 |
| 2 | 1 | 8 | 1 | 4 | | 7 | 5 | 8 | 6 |
| 3 | 5 | 8 | 5 | <u>2</u> | | 9 | 2 | 1 | 0 |
| 4 | 3 | 9 | 0 | 2 | | 1 | 4 | 8 | 7 |
| 5 | | | | | | | | | |
| 6 | 3 | 2 | 0 | 5 | | 8 | 5 | 1 | 8 |
| 7 | 1 | 7 | 2 | 8 | | 0 | 3 | 5 | 1 |
| 8 | 0 | 2 | 8 | 0 | | 9 | 2 | 3 | 9 |
| 9 | 0 | 6 | 7 | 9 | | 3 | 8 | 2 | 3 |

Fig. 9.
Im viertem Schritt soll die Ziffer 2 von der Position (3, 4) gelesen werden.
Der Token hat also zum Schluss die Werte: 6, 5, 0, 2.

**Patentansprüche**

**1.** Vorrichtung zur Identifikation der Identität, bestehend aus Mikrocontroller (1), Speichermodul (2) mit Identifikationsdaten der registrierten Identitäten und das ID Eingabemodul (3), welche mittels Datenbus (4) verbunden sind, wobei die ID eine 2D Barcode Form hat, **dadurch gekennzeichnet, dass** eine Tastaturmatrix als das ID Eingabemodul (3) funktioniert, und derer Tastenstatus (ein-aus) genau dem registrierten ID Muster entsprechen muss um die Authentifizierung der Identität zur ermöglichen.

**2.** Vorrichtung zur Identifikation der Identität nach Anspruch 1, **dadurch gekennzeichnet,**
**dass** in der Tastaturmatrix visuelle Orientierungspunkte symmetrisch verteilt sind, um die Benutzung zu erleichtern.

**3.** Vorrichtung zur Identifikation der Identität nach Anspruch 1, **dadurch gekennzeichnet,**
**dass** die Anzahl der Kombinationen K für die N Tasten, die in der M-Elementen Tastaturmatrix (3) eingeschaltet sein müssen, nach folgender Formel gerechnet wird:

$$K=(M—0)(M—1)(M—2)...(M—N+1)$$

wobei K mindestens der Anzahl der registrierten Identitäten entsprechen muss und die Position der Tasten in der Tastaturmatrix, also Zeile und Spalte statt der optischen Merkmale der Tasten dazu verwendet wird.

**4.** Vorrichtung zur Authentifizierung der Identität bestehend aus: Zufallszahlengenerator (ZZG) (5), Display (6) und Tastatur (7), **dadurch gekennzeichnet,**
**dass** auch die Ressourcen der Vorrichtung nach Anspruch 1 verwendet werden, insbesondere Speichermodul (2), Eingabemodul (3) und Mikrocontroller (1), die mittels Datenbus (4) verbunden sind, wobei das Programm des Mikrocontrollers das Verfahren nach Anspruch 6 realisiert.

**5.** Vorrichtung zur Authentifizierung der Identität bestehend aus
Mikrocontroller (1), Speichermodul (2), ZZG (5), Display (6), Tastatur (7)
die mittels Datenbus (4) verbunden sind, **dadurch gekennzeichnet,**
**dass** jede Taste der Tastatur (7) eine individuelle Farbe hat, derer Varianten zum Kodieren des Privat-Schlüssels mittels Codiermatrix verwendet werden, wobei die Codiermatrix im Display (6) nach Anspruch 6 gebildet wird.

**6.** Das Verfahren zur Authentifizierung der Identität, **gekennzeichnet durch** folgende Merkmale:

a) Das im Speichermodul (2) registrierte Muster des Privat-Schlüssels enthält Koordinaten von jedem Element der Codiermatrix, das vom Eigentümer der Identität zur Verifikation des Schlüssels ausgewählt wurde.
b) Der Mikrocontroller (1) ruft eine Reihe von Zufallszahlen vom ZZG-Modul (5) auf, wobei jede Zufallszahl eine Position der Taste in der Tastatur (7) bestimmt, deren optische Merkmale benutzt werden um das folgende Element der Codiermatrix im Display (6) darzustellen.
c) Der Privat-Schlüssel wird mittels Tastatur (7) eingegeben nach einer Verschlüsselung mit Hilfe der Codiermatrix, die vom Mikrocontroller (1) im Display (6) gebildet ist.
d) Der Mikrocontroller (1) lokalisiert nacheinender jede Taste, die auf der Tastatur (7) gedrückt wurde und berechnet den Grad der optischen Ähnlichkeit mit dem Element der Codiermatrix an der Position (Koordinate: Zeile, Spalte), die vom entsprechenden Element des registrierten Musters bestimmt wurde.
e) Die Verifikation des Privat-Schlüssels endet mit der Berechnung, ob sich der Unterschied zum registrierten Muster von jeder Komponente, die im Anspruch 6d geprüft wurde, innerhalb der Toleranzgrenzen befindet, wobei auch eine räumliche Koordinatenverschiebung um einen bestimmten Vektor toleriert werden kann.

**7.** Das Verfahren zur Authentifizierung der Identität nach Anspruch 6, **dadurch gekennzeichnet, dass** nach jedem Tastendruck in der Tastatur (7) die Tätigkeit vom Anspruch 6b wiederholt wird.

Tastaturmatrix 3

2

Speichermodul

6

Codiermatrix

| 9 | 6 | 1 | 3 | 2 | 8 | 7 | 2 | 5 |
| 6 | 0 | 9 | 2 | 7 | 7 | 5 | 8 | 6 |
| 2 | 5 | 8 | 6 | 4 | 9 | 2 | 1 | 0 |
| 1 | 9 | 3 | 5 | 9 | 1 | 4 | 8 | 7 |
| 6 | 2 | 7 | 0 | 5 | 3 | 8 | 2 | 1 |
| 3 | 3 | 0 | 8 | 1 | 4 | 9 | 3 | 2 |
| 4 | 9 | 2 | 8 | 5 | 2 | 5 | 1 | 7 |
| 5 | 2 | 8 | 0 | 3 | 8 | 9 | 0 | 2 |
| 7 | 1 | 7 | 9 | 2 | 3 | 1 | 0 | 6 |

4

7

Mikrocontroller

Zufallszahlen -generator

Tastatur

| 1 | 2 | 3 | 4 | 5 | 6 | 7 | 8 | 9 | 0 |

1

5

Fig.1. Blockdiagramm der Vorrichtung zur Authentifizierung der Identität

Fig. 2.

Fig. 3.

Fig. 4.

A B
C D

Fig. 5.

| | 1 | 2 | 3 | 4 | 5 | 6 | 7 | 8 | 9 |
|---|---|---|---|---|---|---|---|---|---|
| 1 | ? | ? | ? | ? | ? | ? | ? | ? | ? |
| 2 | ? | ? | ? | ? | ? | ? | ? | ? | ? |
| 3 | ? | ? | ? | ? | ? | ? | ? | ? | ? |
| 4 | ? | ? | ? | ? | ? | ? | ? | ? | ? |
| 5 | ? | ? | ? | ? | ? | ? | ? | ? | ? |
| 6 | ? | ? | ? | ? | ? | ? | ? | ? | ? |
| 7 | ? | ? | ? | ? | ? | ? | ? | ? | ? |
| 8 | ? | ? | ? | ? | ? | ? | ? | ? | ? |
| 9 | ? | ? | ? | ? | ? | ? | ? | ? | ? |

Fig. 6.

| | 1 | 2 | 3 | 4 | 5 | 6 | 7 | 8 | 9 |
|---|---|---|---|---|---|---|---|---|---|
| 1 | 9 | 6 | 1 | 3 | 2 | 8 | 7 | 2 | 5 |
| 2 | _6_ | 0 | 9 | 2 | 7 | 7 | 5 | 8 | 6 |
| 3 | 2 | 5 | 8 | 6 | 4 | 9 | 2 | 1 | 0 |
| 4 | 1 | 9 | 3 | 5 | 9 | 1 | 4 | 8 | 7 |
| 5 | 6 | 2 | 7 | 0 | 5 | 3 | 8 | 2 | 1 |
| 6 | 3 | 3 | 0 | 8 | 1 | 4 | 9 | 3 | 2 |
| 7 | 4 | 9 | 2 | 8 | 5 | 2 | 5 | 1 | 7 |
| 8 | 5 | 2 | 8 | 0 | 3 | 8 | 9 | 0 | 2 |
| 9 | 7 | 1 | 7 | 9 | 2 | 3 | 1 | 0 | 6 |

Fig. 7.

| | 1 | 2 | 3 | 4 | 5 | 6 | 7 | 8 | 9 |
|---|---|---|---|---|---|---|---|---|---|
| 1 | 4 | 9 | 3 | 2 | 0 | 8 | 1 | 4 | 0 |
| 2 | 2 | _5_ | 1 | 7 | 2 | 8 | 5 | 2 | 2 |
| 3 | 8 | 9 | 0 | 2 | 8 | 0 | 3 | 8 | 8 |
| 4 | 3 | 1 | 0 | 6 | 7 | 9 | 2 | 3 | 7 |
| 5 | 8 | 6 | 4 | 9 | 2 | 3 | 8 | 2 | 1 |
| 6 | 3 | 5 | 9 | 1 | 4 | 0 | 9 | 2 | 7 |
| 7 | 7 | 0 | 5 | 3 | 8 | 5 | 8 | 6 | 4 |
| 8 | 0 | 8 | 1 | 4 | 9 | 9 | 3 | 5 | 9 |
| 9 | 2 | 8 | 5 | 2 | 5 | 2 | 7 | 0 | 5 |

Fig. 8.

| | 1 | 2 | 3 | 4 | 5 | 6 | 7 | 8 | 9 |
|---|---|---|---|---|---|---|---|---|---|
| 1 | 6 | 7 | 9 | 2 | 3 | 9 | 0 | 2 | 8 |
| 2 | 9 | 2 | 3 | 8 | 2 | 1 | 0 | 6 | 7 |
| 3 | 1 | 4 | _0_ | 9 | 2 | 6 | 4 | 9 | 2 |
| 4 | 3 | 8 | 5 | 8 | 6 | 5 | 9 | 1 | 4 |
| 5 | 4 | 9 | 9 | 3 | 5 | 0 | 5 | 3 | 8 |
| 6 | 7 | 2 | 8 | 5 | 1 | 8 | 1 | 4 | 9 |
| 7 | 2 | 8 | 0 | 3 | 5 | 8 | 5 | 2 | 5 |
| 8 | 6 | 7 | 9 | 2 | 3 | 9 | 0 | 2 | 8 |
| 9 | 9 | 2 | 3 | 8 | 2 | 3 | 1 | 0 | 6 |

Fig. 9.

| | 1 | 2 | 3 | 4 | 5 | 6 | 7 | 8 | 9 |
|---|---|---|---|---|---|---|---|---|---|
| 1 | 5 | 0 | 5 | 3 | 8 | 8 | 7 | 2 | 5 |
| 2 | 1 | 8 | 1 | 4 | 9 | 7 | 5 | 8 | 6 |
| 3 | 5 | 8 | 5 | _2_ | 5 | 9 | 2 | 1 | 0 |
| 4 | 3 | 9 | 0 | 2 | 8 | 1 | 4 | 8 | 7 |
| 5 | 2 | 3 | 1 | 0 | 6 | 3 | 8 | 2 | 1 |
| 6 | 3 | 2 | 0 | 5 | 2 | 8 | 5 | 1 | 8 |
| 7 | 1 | 7 | 2 | 8 | 8 | 0 | 3 | 5 | 1 |
| 8 | 0 | 2 | 8 | 0 | 7 | 9 | 2 | 3 | 9 |
| 9 | 0 | 6 | 7 | 9 | 2 | 3 | 8 | 2 | 3 |